Europäisches Patentamt

European Patent Office

Office européen des brevets

(19)

(11) EP 0 603 058 B1

(12) **FASCICULE DE BREVET EUROPEEN**

(45) Date de publication et mention
de la délivrance du brevet:
**19.03.1997 Bulletin 1997/12**

(51) Int Cl.$^6$: **G05D 1/10**, B64G 1/36

(21) Numéro de dépôt: **93403018.0**

(22) Date de dépôt: **14.12.1993**

(54) **Procédé de contrôle d'attitude d'un satellite pointé vers un objet céleste et satellite adapté à sa mise en oeuvre**

Lagesteuerungsverfahren für zu einem Himmelsobjekt- ausgerichteten Satelliten und Satellit zur Durchführung desselben

Method for controlling the attitude of a satellite directed towards a celestial object and a satellite for implementing the same

(84) Etats contractants désignés:
**DE ES GB IT NL SE**

(30) Priorité: **17.12.1992 FR 9215231**

(43) Date de publication de la demande:
**22.06.1994 Bulletin 1994/25**

(73) Titulaire: **AEROSPATIALE Société Nationale Industrielle**
**75781 Paris Cédex 16 (FR)**

(72) Inventeurs:
• **Flament, Patrick**
**F-06110 Le Cannet (FR)**
• **Molina-Cobos, Miguel**
**Pozuelo de Alarcon-Madrid (ES)**

(74) Mandataire: **Santarelli, Marc**
**Cabinet Rinuy et Santarelli**
**14, avenue de la Grande Armée**
**75017 Paris (FR)**

(56) Documents cités:
EP-A- 0 209 429    EP-A- 0 338 687
EP-A- 0 363 244    DE-A- 3 417 661
FR-A- 2 649 809

## Description

La présente invention concerne un procédé de pointage d'un satellite par rapport à un objet céleste ou astre (Soleil ou Etoile par exemple) ainsi qu'un dispositif adapté à sa mise en oeuvre.

Un satellite désigne ici tout objet artificiel évoluant dans le système solaire. Cet objet peut être notamment :

- sur une orbite de la Terre ou d'une quelconque autre planète du système solaire,
- sur une orbite d'un satellite d'une quelconque planète du système solaire,
- sur une orbite solaire, éventuellement de transfert entre deux planètes.

Ainsi qu'on le sait, les satellites comportent, en vue du contrôle de leur orbite et de leur attitude, des capteurs et des actionneurs, connectés à des blocs logiques de traitement au sein d'un système communément appelé système de contrôle d'attitude et d'orbite. Les blocs logiques de traitement sont souvent intégrés à un calculateur de bord, les actionneurs comportent par exemple des tuyères (et/ou des bobines magnétiques, et/ou des roues) tandis que l'énergie consommée à bord est fournie par des piles, des cellules solaires soumises à la radiation solaire et/ou par des ergols servant aux impulsions de poussée notamment pour le contrôle d'orbite.

Les capteurs quant à eux sont en pratique de plusieurs espèces, selon la nature, la taille, la luminosité etc... de l'astre (Terre, Soleil, Etoile) qu'ils servent à détecter. On distingue couramment des capteurs 1-axe ou 2-axes.

Un capteur 1-axe désigne en principe un appareil fournissant une coordonnée angulaire de la direction de l'astre visé dans un repère propre au capteur. On définit en pratique pour ce capteur un axe de visée et un axe sensible, et cette coordonnée angulaire est par exemple l'angle que fait l'axe de visée du capteur avec la projection de la direction de l'astre visé sur le plan contenant l'axe de visée perpendiculaire à l'axe sensible.

Un capteur 2-axes désigne ici un appareil fournissant deux coordonnées angulaires de la direction de l'astre visé dans un repère lié au capteur (ce qui détermine complètement cette direction). Cet appareil a donc la fonction de deux capteurs 1-axe d'axes de visée confondus et d'axes sensibles distincts, en général orthogonaux. Pour la détection du Soleil un tel capteur 2-axes est en fait couramment constitué par l'association de deux tels capteurs 1-axe.

En fait un satellite peut être amené à prendre plusieurs attitudes au cours de sa vie après largage vis à vis de son lanceur.

Ainsi par exemple, l'attitude nominale d'un satellite de type stabilisé 3-axes circulant sur une orbite terrestre circulaire consiste à avoir un axe Z, dit axe de lacet, pointé vers la Terre, un axe Y dit axe de tangage perpendiculaire au plan de l'orbite, et un axe X dit de roulis, perpendiculaire aux axes Z et Y et de même sens que la vitesse linéaire instantanée du satellite sur son orbite, le sens de l'axe Y étant tel que le repère (X, Y, Z) soit direct. Une telle attitude nominale est contrôlée à l'aide d'un capteur terrestre, soit seul, soit combiné à des capteurs solaires ou à un capteur stellaire.

D'autres types d'attitude peuvent être envisagés, notamment juste avant l'injection d'un satellite sur son orbite opérationnelle, ou après une quelconque panne grave affectant notamment le système de contrôle d'attitude et d'orbite.

Il est courant dans ces cas-là de chercher à mettre le satellite dans une attitude dite pointé-Soleil dans laquelle il est en rotation lente autour d'un axe pointé vers le Soleil, choisi proche d'un axe principal d'inertie et tel que les panneaux solaires du satellite soient illuminés. Cela permet au satellite d'attendre des commandes ultérieures tout en en assurant la sécurité, c'est-à-dire :

- de garantir la recharge des batteries dont le satellite est équipé,
- d'alimenter les différents équipements dont le satellite a besoin : capteur, calculateur, réchauffeurs, télécommande et télémesure, notamment,
- de garantir un éclairement du satellite par le Soleil tel que la configuration thermique du satellite soit homogène et maintienne les équipements dans la plage de température autorisée.

Classiquement, ce mode de contrôle d'attitude est appelé mode acquisition Soleil et est basé sur un séquencement du type suivant donné à titre d'exemple :

- recherche du Soleil par rotation du satellite autour d'un axe (par exemple l'axe de roulis) tel que le champ de vue d'au moins un capteur solaire rencontre le Soleil,
- rotation du satellite autour d'un axe (par exemple l'axe de tangage) en sorte de rapprocher la direction du Soleil de la direction désirée,
- mise en rotation du satellite autour de la direction du Soleil, et contrôle de cette direction pour qu'elle se confonde avec la direction désirée (par exemple l'axe de roulis).

Le satellite étant ainsi dans une attitude pointé-Soleil, les impératifs de la mission imposent en général qu'il vienne (ou revienne) dans son attitude nominale, c'est-à-dire en pratique qu'il soit ensuite pointé (ou repointé) vers la Terre (ou une Etoile). La méthode de recherche de la Terre ou de l'Etoile qui est classiquement utilisée, dans un tel mode d'acquisition Terre ou d'acquisition Etoile, consiste durant la phase de recherche à mettre le satellite en rotation lente autour d'un axe pointé vers le Soleil, cet axe étant choisi de façon telle que le champ de vue du capteur de Terre (ou d'Etoile) rencontre obligatoirement la Terre (ou l'Etoile).

Dans certains cas où on ne peut rechercher directement la Terre, on commence par rechercher une Etoile de référence, l'Etoile Polaire par exemple : une fois l'Etoile trouvée comme décrit ci-dessus, le satellite est, à partir des mesures du capteur d'Etoile, contrôlé en rotation de façon à amener le champ de vue du capteur de terre face à la Terre : on parle alors d'une acquisition de la Terre via l'Etoile.

L'axe de rotation pointé vers le Soleil durant la recherche de la Terre ou de l'Etoile fait, avec l'axe de visée du capteur de Terre ou d'Etoile, un angle au moins approximativement égal à l'angle Soleil-Satellite-Terre ou Soleil-Satellite-Etoile. Cet axe peut être la direction que devra avoir le Soleil dans le repère lié au satellite une fois que celui-ci sera dans son attitude pointé vers la Terre ou l'Etoile.

Ces différents modes de contrôle d'attitude imposent donc la détermination de la direction du Soleil ou de l'Etoile considérée en vue de sa prise en compte dans les boucles d'asservissement mettant en oeuvre la loi de contrôle correspondant à l'étape en cours du mode de contrôle d'attitude : en particulier dans la dernière phase du mode d'acquisition Soleil, dans la première phase des modes acquisition Terre ou Etoile et dans la dernière phase du mode d'acquisition de la Terre via une Etoile.

Parmi les documents qui concernent un tel passage en attitude nominale, après passage intermédiaire en attitude pointé-Soleil, on peut citer les brevets FR-2.407.860 (MESSERSCHMITT-BOLKOW-BLOHM), EP-0.338.687 (BRITISH AEROSPACE), US-5.080.307 (HUGHES AIRCRAFT) et FR-2.649.809 (MESSERSCHMITT-BOLKOW-BLOHM).

Dans les trois premiers brevets, la détermination de la direction du Soleil se fait à partir de la mesure de deux capteurs solaires 1-axe dont les axes sensibles sont perpendiculaires, ou d'un capteur solaire 2-axes.

De même, dans le brevet EP-0.338.687, le calcul de la direction de l'Etoile se fait à partir de la mesure de deux capteurs stellaires 1-axe dont les axes sensibles sont perpendiculaires, ou d'un capteur stellaire 2-axes.

Le calcul se fait en déterminant les trois coordonnées du vecteur unitaire de la direction instantanée du Soleil ou de l'Etoile dans le repère du capteur à partir de deux mesures angulaires définissant l'orientation de cette direction dans le repère.

Le contrôle se fait en appliquant des commandes du type :

$$\vec{U} = -Kd * [\vec{\omega} - C * \vec{\tilde{S}}_{s/c}] - Kp * [\vec{\tilde{S}}_{s/c} \wedge \overrightarrow{SR}]$$

où :

$\vec{U}$ =    signal de commande à appliquer tel que déterminé par la loi de contrôle

$\vec{\tilde{S}}_{s/c}$ =    vecteur unitaire de la direction instantanée de l'astre considéré (Soleil ou Etoile) calculé à partir des mesures angulaires des capteurs

$\overrightarrow{SR}$ =    vecteur unitaire de la direction de consigne de l'astre considéré

$\vec{\omega}$ =    vecteur vitesse mesuré

$C$ =    vitesse de rotation commandée autour de la direction $\overrightarrow{SR}$

$Kd$ =    gain de régulation en vitesse

$Kp$ =    gain de régulation en position

$\wedge$ =    produit vectoriel (en anglais "cross product")

Durant les modes acquisition Soleil, Terre ou Etoile, la vitesse du satellite autour de ses trois axes est mesurée (à l'aide de gyromètres par exemple) et utilisée dans les lois de contrôle d'attitude, dans le seul but d'amortir les asservissements de position ou de réaliser les asservissements en vitesse.

Un mode de recherche Terre utilisant un seul capteur solaire est décrit dans le brevet FR-2.649.809. Ce brevet propose un procédé dans lequel la direction du Soleil n'est pas complètement déterminée. La loi de contrôle est basée sur le fait que la rotation du satellite provoque un couplage entre les erreurs d'attitude selon l'axe de mesure et selon l'axe sans mesure. Ainsi lorsque le capteur solaire 1-axe détecte une erreur, la loi de contrôle génère une commande propre à annuler cette erreur suivant l'axe de mesure, tandis que l'erreur non mesurable sur l'autre axe est éliminée par couplage.

La loi de contrôle utilisée est du type :

$$\vec{U} = -Kd * [\vec{\omega} - C * \overrightarrow{SR}] + Kp * [\overrightarrow{SR} \Lambda \vec{e}_M + (\overrightarrow{SR} * \overrightarrow{SR}^T) \vec{e}_M - \vec{e}_M] * L(N_{sy} - N_{by})$$

où :

$\vec{U} =$     commande à appliquer

$\overrightarrow{SR} =$     vecteur unitaire de la direction de consigne du Soleil

$\overrightarrow{SR}^T =$     vecteur unitaire transposé de la direction de consigne du Soleil

$\vec{\omega} =$     vecteur vitesse mesuré

$C =$     vitesse de rotation commandée

$Kd =$     gain de régulation en vitesse

$Kp =$     gain de régulation en position

$\vec{e}_M =$     vecteur de l'axe de mesure

$N_{sy} =$     mesure du capteur solaire

$N_{by} =$     correction de la mesure du capteur solaire

$I =$     matrice identité

$L =$     facteur de limitation

$\Lambda =$     produit vectoriel (en anglais "cross product")

On notera que cette commande comporte un terme d'asservissement en vitesse selon trois axes et un terme d'asservissement en position selon deux axes, à savoir l'axe de mesure, et un axe perpendiculaire à cet axe de mesure et à la direction de consigne du Soleil, dit axe de composante non mesurable.

Ce procédé présente les inconvénients suivants :

- complexité des lois de contrôle qui sont très différentes des lois classiques des modes acquisition Terre et Soleil,
- mauvaise précision de pointage autour de l'axe de composante non mesurable car cet axe est contrôlé passivement par couplage et l'erreur d'attitude autour de cet axe n'est jamais mesurée, ni déterminée,
- difficulté à utiliser cette loi de contrôle pour générer des commandes de tuyères sur les deux axes précités car cela impose :

    . soit une logique compliquée de génération d'impulsions de durées différentes sur les différentes tuyères : le modulateur d'impulsion classiquement utilisé sur les satellites connus n'est alors pas applicable,
    . soit d'utiliser des tuyères ayant des orientations spécifiques propres à provoquer des couples sur les deux axes ce qui désoptimise le système de contrôle d'attitude par tuyères du satellite car les directions des tuyères sont alors imposées par la donnée de ces deux axes.

Un mode de recherche Terre utilisant un seul capteur solaire basé sur le couplage entre axes dû à la rotation est décrit également dans le document : "The attitude and orbit control of the EUTELSAT II spacecraft" § 6.11 page 95 ; Symposium on automatic control in space - IFAC - 17-21/7/1989. Ce document propose un mode de recherche Terre dans lequel la direction de consigne du vecteur rotation du satellite au cours de la recherche de la Terre est choisie de façon telle qu'elle forme avec la direction du Soleil un angle égal à l'angle Terre-Satellite-Soleil et que sa composante qui ne peut pas être mesurée soit nulle. Il s'agit dans cet article de la composante en tangage, ce qui revient à dire que le Soleil est maintenu dans le plan XZ du satellite durant toute la phase de recherche de la Terre et que l'attitude finale lors de la capture Terre présente un écart angulaire en lacet. Au cours de la recherche Terre, seul un asservissement en vitesse autour de la direction $\overrightarrow{SR}$ est suggéré, de sorte que la loi de contrôle utilisée par ce mode est probablement du type :

$$\vec{U} = -Kd * [\vec{\omega} - C * \overrightarrow{SR}]$$

où :

$\vec{U}$ = commande à appliquer

$\overrightarrow{SR}$ = vecteur unitaire de la direction de consigne du Soleil

$\vec{\omega}$ = vecteur vitesse mesuré

$C$ = vitesse de rotation autour de $\overrightarrow{SR}$

$Kd$ = gain de régulation en vitesse

Cette méthode a pour inconvénients :

- la nécessité de deux phases supplémentaires : rotation en tangage pour amener le Soleil face au capteur utilisé, puis rotation en lacet pour annuler l'erreur en lacet due au choix particulier de la direction de consigne du Soleil,
- la mauvaise précision du pointage qui se dégrade avec le temps du fait des dérives des gyromètres et du fait que la loi de contrôle ne comprend pas de terme d'asservissement en position. Cette mauvaise précision de pointage :

    . interdit son application au mode d'acquisition Soleil dont la longue durée (typiquement de plusieurs heures) aboutirait avec ce type de loi à des erreurs de pointage rédhibitoires,
    . interdit son application au mode acquisition Etoile qui exige une grande précision de pointage à cause de la nécessité de reconnaître l'Etoile,
    . risque dans certains cas d'aboutir à des échecs de l'acquisition Terre.

Au contraire, la présente invention vise un procédé de pointage du satellite vers un astre tel que le Soleil ou une Etoile :

- qui est applicable à tout satellite stabilisé 3-axes quel que soit la disposition de ses tuyères (contrairement au brevet FR-2.649.809),
- qui ne remet pas en cause les logiques classiquement utilisées pour les modes acquisition Soleil, Terre ou Etoile (contrairement au brevet FR-2.649.809),
- qui utilise la mesure d'un seul capteur solaire ou stellaire à un seul axe de mesure (contrairement aux brevets FR-2.407.860, EP-0.338.687, et US-5.080.307) mais en combinaison avec d'autres mesures disponibles,
- qui est facilement programmable dans le calculateur de bord,
- dont la précision de pointage est optimale grâce à un asservissement en position réalisé de façon active, en permanence, par comparaison de la direction de l'astre calculée avec la direction visée ou de consigne.

L'invention propose à cet effet un procédé de contrôle d'attitude d'un satellite selon lequel on définit la direction d'un objet céleste prédéterminé dans un repère lié au satellite, on mesure le vecteur vitesse angulaire instantanée du satellite, et on applique au satellite, par un ensemble d'actionnement des couples définis par une loi de contrôle en sorte de faire tourner le satellite autour de cette direction tout en orientant un axe de pointage lié au satellite selon cette direction, dans lequel on définit cette direction de l'objet céleste prédéterminé dans le repère lié au satellite par une première grandeur représentative d'un premier angle mesuré entre un axe de visée, et la projection de cette direction sur un premier plan de référence contenant cet axe de visée et par une seconde grandeur représentative d'un second angle défini par cet axe de visée et la projection de cette direction sur un second plan de référence contenant cet axe de visée, caractérisé en ce que ce second angle est calculé à partir de ce premier angle et du vecteur vitesse angulaire instantanée du satellite.

Par rapport aux procédés classiques connus à ce jour, ce procédé permet de faire l'économie d'un axe de mesure de l'astre visé (c'est-à-dire utilisation d'un capteur 1-axe au lieu d'un capteur 2-axes ou économie d'un capteur 1-axe), de sa redondance, et, éventuellement, d'une électronique de commande de capteur, donc de diminuer la masse et le coût du système de contrôle d'attitude du satellite ; cela sans changer la structure des modes acquisition Soleil, Terre ou Etoile.

Ce procédé peut également être appliqué sur un satellite pour faire face à une panne d'une partie de ses capteurs. Dans ce cas, le satellite peut déjà être sur orbite.

La méthode de calcul est basée sur la relation qui lie la direction de l'astre visé et son évolution dans un repère lié au satellite, la mesure unique du capteur et son évolution et les mesures de vitesses angulaires.

Selon des caractéristiques préférées de ce procédé :

- cet axe de visée appartient à un capteur à au moins un axe sensible, le premier plan de référence étant défini comme étant perpendiculaire à l'axe sensible,
- le second plan de référence est perpendiculaire au premier plan de référence et défini comme contenant l'axe de visée et l'axe sensible,
- le capteur est un capteur 1-axe,
- le capteur est un capteur 2-axes dont on utilise une seule sortie,
- les première et seconde grandeurs représentatives des premier et second angles sont les tangentes de ces angles,
- la loi de contrôle est du type :

$$\vec{U} = -Kd * [\ \vec{\omega} - C * \vec{S}_{s/c}] - Kp * [\vec{S}_{s/c} \wedge \overrightarrow{SR}]$$

où :

$\vec{U} =$      commande à appliquer au générateur de couple

$\vec{S}_{s/c} =$      vecteur unitaire de la direction instantanée de l'objet céleste

$\overrightarrow{SR} =$      vecteur unitaire de l'axe de pointage formant axe de consigne de rotation

$\vec{\omega} =$      vecteur vitesse mesuré

$C =$      vitesse de rotation commandée autour de $\overrightarrow{SR}$

$Kd =$      gain de régulation en vitesse

$Kp =$      gain de régulation en position

$\wedge =$      produit vectoriel (en anglais "cross product")

- l'objet céleste est le Soleil,
- l'axe de pointage est un axe au moins approximativement proche d'un axe d'inertie du satellite, choisi en sorte d'obtenir une illumination permanente d'un générateur solaire que comporte le satellite, grâce à quoi le satellite est dans un mode pointé Soleil,
- le satellite comporte un autre capteur ayant un second axe de visée, adapté à détecter un autre objet céleste prédéterminé et l'axe de pointage est choisi en sorte de faire, avec ce second axe de visée, un angle au moins approximativement égal à l'angle (Soleil) - satellite -(ou autre objet céleste),
- cet autre objet céleste est une Etoile grâce à quoi le satellite est en mode acquisition Etoile,
- cet autre objet céleste est la Terre grâce à quoi le satellite est en mode acquisition Terre,
- l'objet céleste est une Etoile,
- le satellite comporte en outre un capteur terrestre ayant un second axe de visée, et l'axe de pointage est choisi en sorte de faire avec ce second axe de visée un angle au moins approximativement égal à l'angle Etoile-Satellite-Terre grâce à quoi le satellite est en mode acquisition Terre à partir d'une Etoile.

L'invention propose également un satellite comportant un corps, un capteur ayant un axe de visée adapté à détecter un objet céleste prédéterminé et à fournir une première grandeur représentative d'un premier angle mesuré entre l'axe de visée et la projection de la direction instantanée de l'objet céleste sur un premier plan de référence contenant cet axe de visée, un ensemble d'actionnement, un bloc de contrôle d'attitude propre à générer, à partir de cette première grandeur et d'une seconde grandeur représentative d'un angle défini par l'axe de visée et la projection de cette direction instantanée de l'objet céleste sur un second plan de référence contenant cet axe de visée, distinct du premier plan de référence, des signaux propres à faire appliquer au satellite, par l'ensemble d'actionnement, des couples propres à faire tourner le satellite autour de cette direction et à orienter un axe de pointage selon cette direction, et un ensemble de mesure de la vitesse instantanée de rotation du satellite, caractérisé en ce que cette seconde grandeur représentative est appliquée au bloc de contrôle d'attitude par un bloc de prétraitement adapté à calculer cette seconde grandeur à partir de la première grandeur et du signal de sortie de l'ensemble de mesure de la vitesse instantanée de rotation.

Selon des caractéristiques préférées de ce satellite :

- ce capteur est un capteur à un seul axe sensible, le premier plan de référence étant perpendiculaire à cet axe sensible, et le second plan de référence contenant cet axe sensible,
- le capteur est un capteur solaire,
- le satellite comporte en outre un capteur stellaire,
- le satellite comporte en outre un capteur terrestre,
- le capteur est un capteur stellaire,
- l'ensemble d'actionnement comporte des tuyères,
- l'ensemble de mesure de la vitesse instantanée de rotation du satellite comporte des gyromètres.

Des objets, caractéristiques et avantages de l'invention ressortent de la description qui suit, donnée à titre d'exemple non limitatif, en regard des dessins annexés sur lesquels :

- la figure 1 est un schéma d'un capteur 1-axe,
- la figure 2 est une vue schématique en perspective d'un satellite conforme à l'invention,
- la figure 3 est un schéma fonctionnel d'un dispositif de pointage conforme à l'invention,
- la figure 4 est une vue en perspective du satellite de la figure 2 en phase de recherche de la Terre, et,
- la figure 5 est une vue schématique de ce satellite après capture de la Terre.

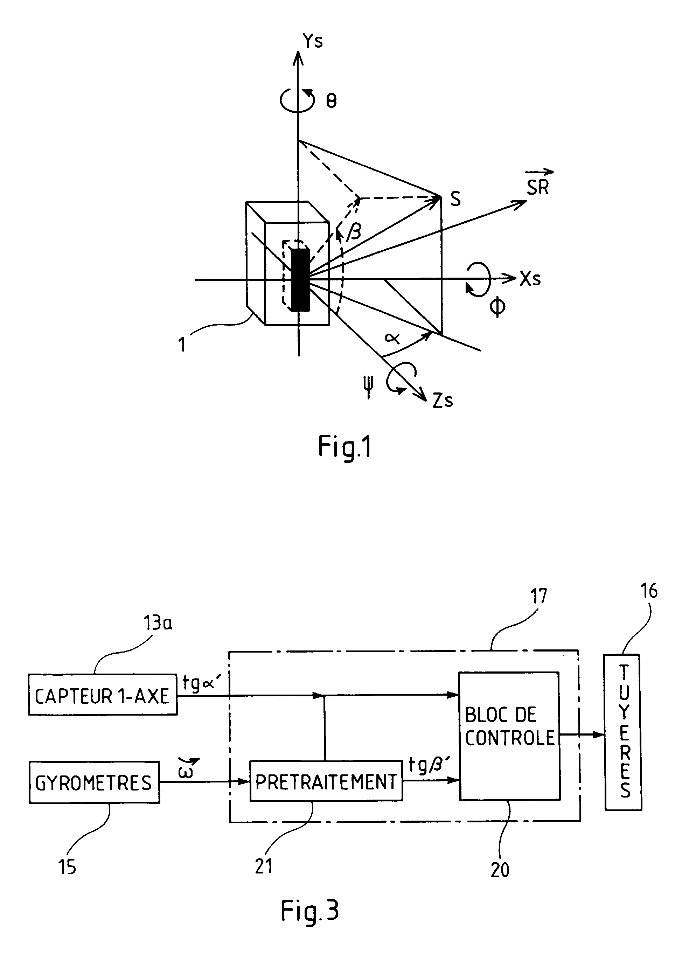

Un capteur 1-axe tel que schématisé sous la référence 1 à la figure 1, se représente en pratique par une fente allongée selon un axe Ys dit axe sensible, perpendiculaire à un axe Xs dit axe sans mesure, tandis que l'axe Zs perpendiculaire au plan XsYs du capteur est appelé axe optique ou axe de visée, destiné à être orienté suffisamment près de l'objet céleste à détecter pour que ce dernier rentre dans le champ de vue du capteur.

Ce qui vient d'être dit s'applique tout particulièrement au cas où le capteur est un capteur solaire. Un capteur stellaire est en général composé d'un détecteur à transfert de charge matriciel (matrice CCD) sur laquelle on projette une image de l'Etoile. La mesure du capteur est en fait composée des deux coordonnées du ou des pixel(s) éclairé(s) par l'Etoile. Ce capteur stellaire, en général à 2-axes, peut ne fournir qu'une indication 1-axe si une panne de traitement de la mesure entraîne la fourniture d'une seule coordonnée au lieu de deux. Dans ce cas, l'invention peut être appliquée.

Si S est la direction de cet objet céleste, le capteur 1 fournit un signal de mesure représentatif de l'angle $\alpha$ entre l'axe de visée et la projection de cette direction dans un plan de référence passant par l'axe de visée et perpendiculaire à l'axe sensible.

Il est important de noter que l'angle $\beta$ entre l'axe de visée et la projection de S dans un second plan de référence défini par l'axe de visée et l'axe sensible n'est par contre pas mesuré.

On désigne par $\Phi$, $\theta$ et $\Psi$ les dérives d'attitude que le satellite peut subir autour des axes de Xs, Ys et Zs qui, pour le capteur, sont des axes de roulis, tangage et lacet.

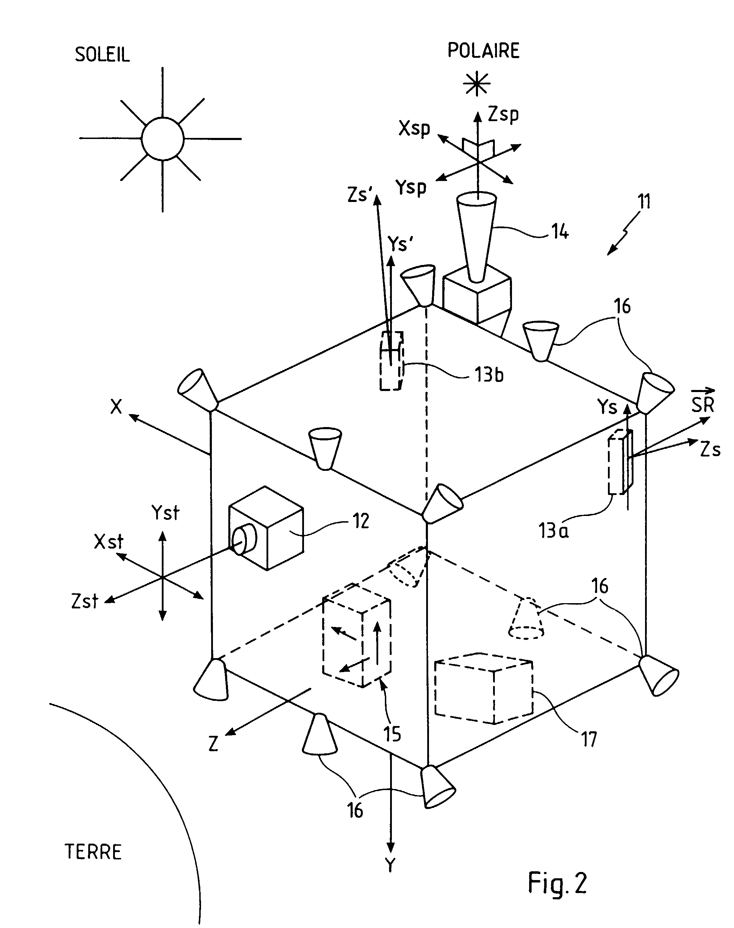

La figure 2 représente de façon schématique le corps 11 d'un satellite stabilisé 3-axes conforme à l'invention, comportant par ailleurs, de façon classique, un générateur solaire à une ou plusieurs aile(s) (non représenté).

Dans le cas considéré ici d'une orbite terrestre donnée, de préférence géosynchrone, de faible inclinaison (typiquement inférieure à 10°) les trois axes selon lesquels on cherche à stabiliser ce satellite (c'est-à-dire son corps) en attitude nominale sont, respectivement, un axe dirigé vers la Terre couramment noté Z et appelé axe de lacet, un axe perpendiculaire au plan de l'orbite et dirigé vers le sud, noté Y et appelé axe de tangage, et un axe X formant avec les axes de tangage et de lacet un trièdre (X, Y, Z) orthonormé direct, et appelé axe de roulis. En pratique, lorsque l'orbite est circulaire, cet axe de roulis est tangent à l'orbite et de préférence de même sens que la vitesse avec laquelle le satellite parcourt l'orbite. Généralement le générateur solaire est allongé parallèlement à l'axe de tangage.

Le corps 11 du satellite comporte un système de contrôle d'attitude et d'orbite comprenant :

- un système de détection terrestre 12, ici formé d'un détecteur 2-axes unique, ayant un axe optique Zst parallèle ou proche de l'axe Z et deux axes de mesure (ou axes sensibles) Xst et Yst (en pratique orthogonaux) transversaux à l'axe optique, avantageusement proches voire parallèles aux axes X et Y du satellite, respectivement (le champ de vue est par exemple de ± 14° autour de l'axe Ys et de ± 5° autour de l'axe Xs),

- un système de détection solaire comportant une pluralité de capteurs solaires 1-axe ayant des axes de visée d'orientations différentes : deux capteurs 13a et 13b sont ici représentés, avec des axes de visée Zs et Zs' respectivement orientés dans le plan XZ au moins approximativement à 45° des axes -X et -Z d'une part, et X et -Z d'autre part, et ayant des axes sensibles au moins approximativement parallèles à Y,

- un éventuel système de détection stellaire 14, ici formé d'un détecteur 2-axes, ayant un axe optique Zsp pointé vers le Nord en sorte de pouvoir détecter l'Etoile Polaire (il est rappelé que l'Etoile Polaire est très proche du Nord) et deux axes de mesure Xsp et Ysp parallèles à X et Z ; ce système de détection stellaire 14 est en pratique décalé de l'axe Y d'une distance suffisante pour éviter que le générateur solaire empiète sensiblement dans son champ de vue,

- un ensemble de détection de vitesse angulaire 15, par exemple des gyromètres, pour la mesure des vitesses angulaires du satellite autour de trois axes de préférence parallèles aux axes X, Y et Z,

- un ensemble d'actionnement, ici formé de tuyères 16 au moins au nombre de quatre (ici six), pour la génération autour des axes X, Y et Z de couples de commande positifs ou négatifs, et

- un ensemble de traitement 17, analogique ou digital, pour le traitement des mesures fournies par les systèmes de détection et l'élaboration grâce à des lois de contrôle classiques en soi en régime nominal de contrôle d'attitude ou en mode de réacquisition, des ordres de commandes destinés à l'ensemble d'actionnement (au travers de filtres, limiteurs et modulateurs).

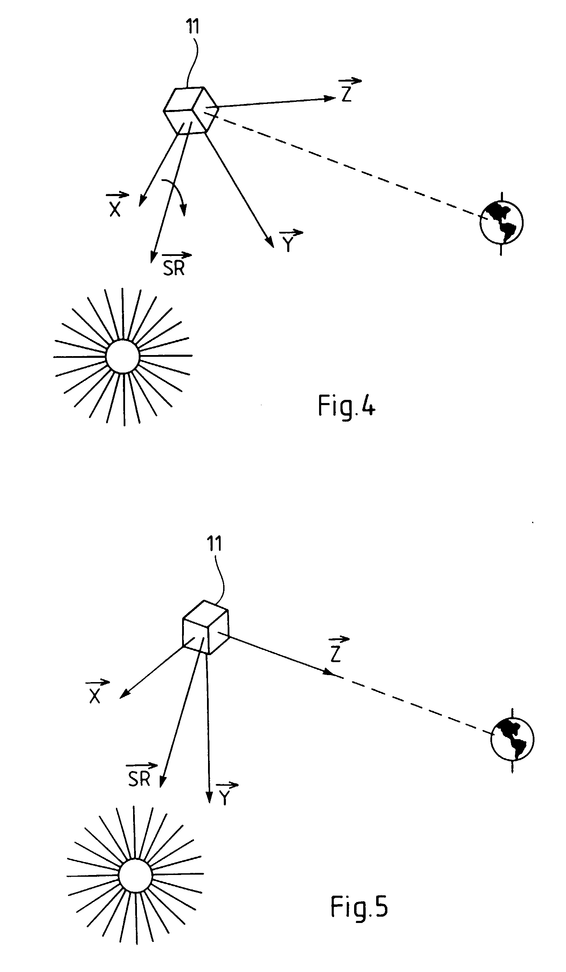

Le procédé de l'invention est décrit ci-dessous à propos du schéma fonctionnel de la figure 3, faisant intervenir l'un quelconque des capteurs solaires à un seul axe (choisi en fonction de la direction de rotation souhaitée) et l'ensemble de détection de vitesse angulaire 15. Dans l'exemple considéré, le pointage est effectué à l'aide du capteur solaire 13a.

Les diverses grandeurs qui vont être utilisées dans le calcul itératif défini ci-dessous, ont les définitions suivantes :

| | |
|---|---|
| $SX_{s/c}$, $SY_{s/c}$, $SZ_{s/c}$ : | composantes du vecteur unitaire de la direction de l'astre en axes satellite, |
| SX, SY, SZ : | composantes du vecteur unitaire de la direction de l'astre en axes capteur à l'instant précédent, |
| SX', SY', SZ': | composantes du vecteur unitaire de la direction de l'astre en axes capteurs à l'instant courant, |
| $\alpha$ : | angle entre l'axe Zs et la projection de la direction de l'astre dans le plan XsZs dans le repère capteur, |
| $\beta$ : | angle entre l'axe Zs et la projection de la direction de l'astre dans le plan YsZs dans le repère capteur, |
| $tg\alpha'= SX'/SZ'$: | mesure courante de $\alpha$ par le capteur |
| $tg\alpha = SX/SZ$ : | mesure précédente de $\alpha$ par le capteur utilisé |
| $tg\beta'= SY'/SZ'$: | estimation courante de $\beta$ |
| $(tg\beta')_f$ : | valeur filtrée courante de $tg\beta$ |
| $(tg\beta)_f$ : | valeur filtrée précédente de $tg\beta$ |
| $\Phi$, $\theta$, $\Psi$ : | micro-rotations roulis, tangage et lacet entre les repères capteurs aux instants précédent et courant |
| Dt : | durée du cycle de calcul |
| $\omega_{xs}=\frac{\Phi}{Dt}$, $\omega_{ys}=\frac{\theta}{Dt}$, $\omega_{zs}=\frac{\Psi}{Dt}$ : | vitesse roulis, tangage et lacet en axes capteur |
| $\omega_{xs/c}$, $\omega_{ys/c}$, $\omega_{zs/c}$ : | vitesses roulis, tangage et lacet mesurée en axe satellite |
| M : | matrice de passage entre les axes satellite et les axes capteurs |
| $M^{-1}$ : | matrice inverse de la matrice M |

Il est tout d'abord à noter que l'on passe des composantes du vecteur astre en axes capteur, entre les instants précédents et courants par l'équation matricielle :

$$\begin{bmatrix} SX \\ SY \\ SZ \end{bmatrix} = \begin{bmatrix} 1 & -\psi & \theta \\ \psi & 1 & -\phi \\ -\theta & \phi & 1 \end{bmatrix} \begin{bmatrix} SX' \\ SY' \\ SZ' \end{bmatrix}$$

La variation $\Delta$ de la tangente de l'angle mesuré $\alpha$ vaut : $\Delta = tg\alpha'$ - $tg\alpha$ c'est-à-dire :

$$\Delta = tg\alpha' - tg\alpha = \frac{SX'}{SZ'} - \frac{SX}{SZ} = \frac{SX'}{SZ'} - \frac{SX' - \Psi * SY' + \theta * SZ'}{SZ' + \phi * SY' - \theta * SX'}$$

ou encore :

$$\Delta = \frac{-\phi * tg\alpha' * tg\beta' - tg\alpha' * tg\alpha * \theta - tg\beta' * \Psi - \theta}{1 - tg\beta' * \phi - tg\alpha' * \theta}$$

L'estimation de la composante angulaire non mesurée $\beta'$ de la direction de l'astre dans le repère capteur se fait :

- par calcul des vitesses instantanées de rotation dans le repère capteur selon la formule de changement de repère :

$$\begin{bmatrix} \omega_{xs} \\ \omega_{ys} \\ \omega_{zs} \end{bmatrix} = M \begin{bmatrix} \omega_{xs/c} \\ \omega_{ys/c} \\ \omega_{zs/c} \end{bmatrix}$$

- d'où on calcule tg$\beta'$ par la relation :

$$tg\beta' = -\frac{\omega_{ys} + tg\alpha * tg\alpha' * \omega_{ys} + \frac{\Delta}{Dt}}{\omega_{zs} + \omega_{xs} * tg\alpha}$$

On procède avantageusement à un filtrage de tg$\beta'$ pour éliminer l'effet de la détermination cyclique de cette tangente. Ce filtrage est par exemple du premier ordre de type :

$$(tg\beta')_f = a(tg\beta)_f + (1-a) \, tg\beta'$$

où l'indice f correspond aux valeurs filtrées et où $\underline{a}$ est une constante.

On passe enfin, de manière connue, de ces tangentes aux composantes du vecteur unitaire de la direction de l'astre dans le repère capteur selon les équations :

$$SX' = \frac{tg\alpha'}{\sqrt{1 + tg^2\alpha' + tg^2\beta'}}$$

$$SY' = \frac{tg\beta'}{\sqrt{1 + tg^2\alpha' + tg^2\beta'}}$$

$$SZ' = \frac{1}{\sqrt{1 + tg^2\alpha' + tg^2\beta'}}$$

puis par changement de repère on détermine ces composantes dans le repère satellite :

$$\begin{bmatrix} SX_{s/c} \\ SY_{s/c} \\ SZ_{s/c} \end{bmatrix} = M \begin{bmatrix} SX' \\ SY' \\ SZ' \end{bmatrix}$$

Le contrôle d'attitude proprement dit est obtenu ensuite par une loi classique, par exemple celle-ci, déjà présentée ci-dessus en préambule :

$$\vec{U} = -Kd * [\vec{\omega} - C * \vec{S}_{s/c}] - Kp * [\vec{S}_{s/c} \wedge \overrightarrow{SR}]$$

où $\overrightarrow{SR}$ a la même signification que précédemment.

Sur la figure 3 on voit ainsi le capteur dont le champ de vue contient la direction satellite-astre (ici le capteur 1-axe 13a), l'ensemble de détection de vitesse angulaire 15 formé de gyromètres, l'ensemble de traitement 17 et les moyens d'actionnement 16.

Le bloc de traitement 17 comporte un bloc de contrôle 20, classique en soi, adapté à fournir des signaux $\vec{U}$ de contrôle d'attitude à partir de deux grandeurs caractéristiques de l'orientation angulaire de la direction satellite-astre (ici les tangentes des angles instantanés $\alpha'$ et $\beta'$).

Selon l'invention l'une de ces grandeurs est déduite, non pas directement et uniquement de la sortie d'un capteur angulaire de position, mais de la vitesse angulaire instantanée du satellite dans le repère (X, Y, Z) qui lui est lié.

Le bloc de traitement 17 comporte à cet effet un bloc de prétraitement 21 adapté, à partir de la seule grandeur $tg\alpha$ fournie par le capteur 13a et de la vitesse angulaire instantanée $\vec{\omega}$, à calculer comme indiqué ci-dessus, l'autre grandeur $tg\beta$ dont le bloc de contrôle a besoin.

On observe sur la figure 4 le satellite 11 en phase de recherche de la Terre. Le satellite 11 tourne autour de l'axe $\overrightarrow{SR}$ pointé vers le Soleil. Cette rotation amène l'axe de visée du capteur terrestre (qui est confondu avec l'axe de lacet du satellite) en face de la Terre autorisant ainsi sa capture. Cette situation est schématisée sur la figure 5.

Il va de soi que la description qui précède n'a été proposée qu'à titre d'exemple non limitatif et que de nombreuses variantes peuvent être proposées par l'homme de l'art sans sortir du cadre de l'invention. Ainsi par exemple, le capteur stellaire pourrait être supprimé : un capteur solaire 1-axe d'axe de visée approximativement dirigé selon Z peut alors être rajouté pour compléter le champ dans lequel on peut rechercher, à tout instant, le Soleil. De même le procédé de l'invention s'applique sans problème :

- au cas d'un satellite muni d'au moins un capteur solaire ou stellaire 2-axes formé de deux capteurs 1-axe couplés, dont l'un viendrait à tomber en panne,
- au cas d'un satellite muni d'au moins un capteur stellaire 2-axes dont la mesure suivant l'un des axes est indisponible par suite d'une panne.

## Revendications

1. Procédé de contrôle d'attitude d'un satellite (11) selon lequel on définit la direction (S) d'un objet céleste prédéterminé dans un repère lié au satellite, on mesure le vecteur vitesse angulaire instantanée $(\vec{\omega})$ du satellite, et on applique au satellite, par un ensemble d'actionnement (16) des couples définis par une loi de contrôle en sorte de faire tourner le satellite autour de cette direction tout en orientant un axe de pointage $(\overrightarrow{SR})$ lié au satellite selon cette direction, dans lequel on définit cette direction de l'objet céleste prédéterminé dans le repère lié au satellite par une première grandeur représentative d'un premier angle $(\alpha, \alpha')$ mesuré entre un axe de visée (Zs, Zs') et la projection de cette direction sur un premier plan de référence contenant cet axe de visée et par une seconde grandeur représentative d'un second angle $(\beta')$ défini par cet axe de visée et la projection de cette direction sur un second plan de référence contenant cet axe de visée, caractérisé en ce que ce second angle est calculé à partir de ce premier angle et du vecteur vitesse angulaire instantanée du satellite.

2. Procédé selon la revendication 1, caractérisé en ce que cet axe de visée appartient à un capteur (13a, 13b) à au moins un axe sensible (Ys, Ys'), le premier plan de référence étant défini comme étant perpendiculaire à l'axe sensible.

3. Procédé selon la revendication 2, caractérisé en ce que le second plan de référence est perpendiculaire au premier plan de référence et défini comme contenant l'axe de visée et l'axe sensible.

4. Procédé selon la revendication 2 ou la revendication 3, caractérisé en ce que le capteur est un capteur 1-axe.

5. Procédé selon la revendication 2 ou la revendication 3, caractérisé en ce que le capteur est un capteur 2-axes dont on utilise une seule sortie.

6. Procédé selon l'une quelconque des revendications 1 à 3, caractérisé en ce que les première et seconde grandeurs représentatives des premier et second angles sont les tangentes de ces angles.

7. Procédé selon l'une quelconque des revendications 1 à 6, dans lequel la loi de contrôle est du type :

$$\vec{U}=-Kd*[\vec{\omega}-C*\vec{S}_{s/c}]-Kp*[\vec{S}_{s/c}\Lambda\overrightarrow{SR}]$$

où :

$\vec{U}=$ commande à appliquer au générateur de couple

$\vec{S}_{s/c}=$ vecteur unitaire de la direction instantanée de l'objet céleste

$\overrightarrow{SR}=$ vecteur unitaire de l'axe de pointage formant axe de consigne de rotation

$\vec{\omega}=$ vecteur vitesse mesuré

$C=$ vitesse de rotation commandée autour de $\overrightarrow{SR}$

$Kd=$ gain de régulation en vitesse

$Kp=$ gain de régulation en position

$\Lambda=$ produit vectoriel

8. Procédé selon l'une quelconque des revendications 1 à 7 dans lequel l'objet célestre est le Soleil.

9. Procédé selon la revendication 8, caractérisé en ce que l'axe de pointage est un axe au moins approximativement proche d'un axe d'inertie du satellite, choisi en sorte d'obtenir une illumination permanente d'un générateur solaire que comporte le satellite, grâce à quoi le satellite est dans un mode pointé Soleil.

10. Procédé selon la revendication 8, caractérisé en ce que le satellite comporte un autre capteur (12, 14) ayant un second axe de visée, adapté à détecter un autre objet céleste prédéterminé et l'axe de pointage est choisi en sorte de faire, avec ce second axe de visée, un angle au moins approximativement égal à l'angle (Soleil) - satellite - (ou autre objet céleste).

11. Procédé selon la revendication 10, caractérisé en ce que cet autre objet céleste est une Etoile grâce à quoi le satellite est en mode acquisition Etoile.

12. Procédé selon la revendication 10, caractérisé en ce que cet autre objet céleste est la Terre grâce à quoi le satellite est en mode acquisition Terre.

13. Procédé selon l'une quelconque des revendications 1 à 7, caractérisé en ce que l'objet céleste est une Etoile.

14. Procédé selon la revendication 13, caractérisé en ce que le satellite comporte en outre un capteur terrestre (12) ayant un second axe de visée, et l'axe de pointage est choisi en sorte de faire avec ce second axe de visée un angle au moins approximativement égal à l'angle Etoile - Satellite - Terre grâce à quoi le satellite est en mode acquisition Terre à partir d'une Etoile.

15. Procédé selon l'une quelconque des revendications 1 à 14, caractérisé en ce que le satellite est stabilisé 3-axes sur une orbite géosynchrone d'inclinaison inférieure à 10 degrés.

16. Satellite comportant un corps (11), un capteur (13a, 13b) ayant un axe de visée (Zs) adapté à détecter un objet céleste prédéterminé et à fournir une première grandeur représentative d'un premier angle ($\alpha$, $\alpha'$) mesuré entre l'axe de visée et la projection de la direction instantanée de l'objet céleste sur un premier plan de référence contenant cet axe de visée, un ensemble d'actionnement (16), un bloc de contrôle d'attitude (20) propre à générer, à partir de cette première grandeur et d'une seconde grandeur représentative d'un angle ($\beta'$) défini par l'axe de visée et la projection de cette direction instantanée de l'objet céleste sur un second plan de référence contenant cet axe de visée, distinct du premier plan de référence, des signaux propres à faire appliquer au satellite, par l'ensemble d'actionnement (16), des couples propres à faire tourner le satellite autour de cette direction et à orienter un axe de pointage selon cette direction, et un ensemble (15) de mesure de la vitesse instantanée de rotation du satellite, caractérisé en ce que cette seconde grandeur représentative est appliquée au bloc de contrôle d'attitude par un bloc de prétraitement (21) adapté à calculer cette seconde grandeur à partir de la première grandeur et du signal de sortie de l'ensemble (15) de mesure de la vitesse instantanée de rotation.

17. Satellite selon la revendication 16, caractérisé en ce que ce capteur est un capteur à un seul axe sensible, le premier plan de référence étant perpendiculaire à cet axe sensible, et le second plan de référence contenant cet axe sensible.

18. Satellite selon la revendication 16 ou la revendication 17, caractérisé en ce que le capteur est un capteur solaire.

19. Satellite selon la revendication 18, caractérisé en ce que le satellite comporte en outre un capteur stellaire.

20. Satellite selon l'une quelconque des revendications 16 à 20, caractérisé en ce que l'ensemble d'actionnement comporte des tuyères.

21. Satellite selon l'une quelconque des revendications 16 à 21, caractérisé en ce que l'ensemble de mesure de la vitesse instantanée de rotation du satellite comporte des gyromètres.

## Patentansprüche

1. Verfahren zur Lageregelung eines Satelliten (11), gemäß dem man die Richtung (S) eines vorgegebenen Himmelsobjekts in einem Bezugspunkt bestimmt, der mit dem Satelliten verbunden ist, den Vektor der momentanen Winkelgeschwindigkeit ($\vec{\omega}$) des Satelliten mißt und an den Satelliten durch eine Antriebskonstruktion (16) Drehmomente anlegt, die durch ein Regelgesetz so bestimmt werden, daß sie den Satelliten sich um diese Richtung drehen lassen, während sie eine Richtachse ($\overrightarrow{SR}$), die mit dem Satelliten verbunden ist, gemäß dieser Richtung orientieren, in dem man diese Richtung des vorgegebenen Himmelsobjekts im Bezugspunkt, der mit dem Satelliten verbunden ist, durch eine erste repräsentative Größe eines ersten Winkels ($\alpha$, $\alpha'$), der zwischen einer Beobachtungsachse (Zs, Zs') und der Projektion dieser Richtung auf eine erste Bezugsebene gemessen wird, welche diese Beobachtungsachse enthält, und durch eine zweite repräsentative Größe eines zweiten Winkels ($\beta'$) bestimmt, der durch diese Beobachtungsachse und die Projektion dieser Richtung auf eine zweite Bezugsebene bestimmt wird, welche diese Beobachtungsachse enthält, dadurch gekennzeichnet, daß dieser zweite Winkel ausgehend von diesem ersten Winkel und vom Vektor der momentanen Winkelgeschwindigkeit des Satelliten errechnet wird.

2. Verfahren nach Anspruch 1, dadurch gekennzeichnet, daß diese Beobachtungsachse zu einem Sensor (13a, 13b) mit mindestens einer empfindlichen Achse (Ys, Ys') gehört, wobei die erste Bezugsebene so bestimmt ist, daß sie senkrecht zur empfindlichen Achse ist.

3. Verfahren nach Anspruch 2, dadurch gekennzeichnet, daß die zweite Bezugsebene senkrecht zur ersten Bezugsebene ist und so bestimmt ist, daß sie die Beobachtungsachse und die empfindliche Achse enthält.

4. Verfahren nach Anspruch 2 oder Anspruch 3, dadurch gekennzeichnet, daß der Sensor ein einachsiger Sensor ist.

5. Verfahren nach Anspruch 2 oder Anspruch 3, dadurch gekennzeichnet, daß der Sensor ein zweiachsiger Sensor ist, von dem man einen einzigen Ausgang verwendet.

6. Verfahren nach einem der Ansprüche 1 bis 3, dadurch gekennzeichnet, daß die erste und die zweite repräsentative Größe des ersten und des zweiten Winkels die Tangens dieser Winkel sind.

7. Verfahren nach einem der Ansprüche 1 bis 6, in dem das Regelgesetz von der folgenden Art ist:

$$\vec{U}=-Kd*[\vec{\omega}-C*\vec{S}_{s/c}]-Kp*[\vec{S}_{s/c} \wedge \overrightarrow{SR}],$$

wobei

$\vec{U} =$ an den Drehmomentgenerator anzulegende Steuerung,

$\vec{S}_{s/c} =$ Einheitsvektor der momentanen Richtung des Himmelsobjekts,

$\overrightarrow{SR} =$ Einheitsvektor der Richtachse, die die Einstellachse der Rotation bildet,

$\vec{\omega} =$ gemessener Geschwindigkeitsvektor,

$C =$ angewiesene Rotationsgeschwindigkeit um $\overrightarrow{SR}$,

$Kd =$ Verstärkungsfaktor der Geschwindigkeitsregelung,

$Kp =$ Verstärkungsfaktor der Positionsregelung,

$\Lambda =$ Vektorprodukt.

8. Verfahren nach einem der Ansprüche 1 bis 7, in dem das Himmelsobjekt die Sonne ist.

9. Verfahren nach Anspruch 8, dadurch gekennzeichnet, daß die Richtachse eine Achse ist, die zumindest ungefähr einer Trägheitsachse des Satelliten nahe ist und so ausgewählt ist, daß man eine ständige Bestrahlung eines Solargenerators erhält, den der Satellit trägt, wodurch sich der Satellit in einem Modus befindet, der gegen die Sonne gerichtet ist.

10. Verfahren nach Anspruch 8, dadurch gekennzeichnet, daß der Satellit einen anderen Sensor (12, 14) aufweist, der eine zweite Beobachtungsachse hat, die dafür ausgelegt ist, ein anderes vorgegebenes Himmelsobjekt zu erfassen, und daß die Richtachse so ausgewählt ist, daß sie mit dieser zweiten Beobachtungsachse einen Winkel einschließt, der zumindest ungefähr gleich dem Winkel (Sonne) - Satellit - (oder anderes Himmelsobjekt) ist.

11. Verfahren nach Anspruch 10, dadurch gekennzeichnet, daß dieses andere Himmelsobjekt ein Stern ist, wodurch sich der Satellit im Sternerfassungsmodus befindet.

12. Verfahren nach Anspruch 10, dadurch gekennzeichnet, daß dieses andere Himmelsobjekt die Erde ist, wodurch sich der Satellit im Erderfassungsmodus befindet.

13. Verfahren nach einem der Ansprüche 1 bis 7, dadurch gekennzeichnet, daß das Himmelsobjekt ein Stern ist.

14. Verfahren nach Anspruch 13, dadurch gekennzeichnet, daß der Satellit außerdem einen Erdsensor (12) aufweist, der eine zweite Beobachtungsachse hat, und daß die Richtachse so ausgewählt ist, daß sie mit dieser zweiten Beobachtungsachse einen Winkel einschließt, der zumindest ungefähr gleich dem Winkel Stern - Satellit - Erde ist, wodurch sich der Satellit im Erderfassungsmodus von einem Stern aus befindet.

15. Verfahren nach einem der Ansprüche 1 bis 14, dadurch gekennzeichnet, daß der Satellit auf einem geosynchronen Orbit mit einer Inklination von weniger als 10 Grad dreiachsenstabilisiert ist.

16. Satellit, aufweisend einen Körper (11), einen Sensor (13a, 13b), der eine Beobachtungsachse (Zs) hat, die dafür ausgelegt ist, ein vorgegebenes Himmelsobjekt zu erfassen und eine erste repräsentative Größe eines ersten Winkels ($\alpha$, $\alpha'$) zu liefern, der zwischen der Beobachtungsachse und der Projektion der momentanen Richtung des Himmelsobjekts auf eine erste Bezugsebene, die diese Beobachtungsachse enthält, gemessen wird, eine Antriebskonstruktion (16), einen Lageregelungsblock (20), der geeignet ist, ausgehend von dieser ersten Größe und einer zweiten repräsentativen Größe eines Winkels ($\beta'$), der durch die Beobachtungsachse und die Projektion dieser momentanen Richtung des Himmelsobjekts auf eine zweite Bezugsebene, die diese Beobachtungsachse enthält und von der ersten Bezugsebene verschieden ist, bestimmt wird, Signale zu erzeugen, die geeignet sind, durch die Antriebskonstruktion (16) Drehmomente an den Satelliten anlegen zu lassen, die geeignet sind, den Satelliten sich um diese Richtung drehen zu lassen und eine Richtachse gemäß dieser Richtung auszurichten, und eine Konstruktion (15) zur Messung der momentanen Rotationsgeschwindigkeit des Satelliten, dadurch gekennzeichnet, daß diese zweite repräsentative Größe an den Lageregelungsblock durch einen Vorverarbeitungsblock (21) angelegt wird, der dafür ausgelegt ist, diese zweite Größe ausgehend von der ersten Größe und vom Ausgangssignal der Konstruktion (15) zur Messung der momentanen Rotationsgeschwindigkeit zu errechnen.

17. Satellit nach Anspruch 16, dadurch gekennzeichnet, daß dieser Sensor ein Sensor mit einer einzigen empfindlichen Achse ist, die erste Bezugsebene senkrecht zu dieser empfindlichen Achse ist und die zweite Bezugsebene diese empfindliche Achse enthält.

18. Satellit nach Anspruch 16 oder Anspruch 17, dadurch gekennzeichnet, daß der Sensor ein Solarsensor ist.

19. Satellit nach Anspruch 18, dadurch gekennzeichnet, daß der Satellit außerdem einen Stellarsensor aufweist.

20. Satellit nach einem der Ansprüche 16 bis 19, dadurch gekennzeichnet, daß die Antriebskonstruktion Düsen aufweist.

21. Satellit nach einem der Ansprüche 16 bis 20, dadurch gekennzeichnet, daß die Konstruktion zur Messung der momentanen Rotationsgeschwindigkeit des Satelliten Gyrometer aufweist.

## Claims

1. Method for controlling the attitude of a satellite (11) according to which the direction (S) of a predetermined celestial object is defined in a reference related to the satellite, the instantaneous angular velocity vector ($\vec{\omega}$) of the satellite is measured, and torques defined by a control law are applied to the satellite by an actuation assembly (16), in order to cause the satellite to rotate about this direction whilst orienting an aiming axis ($\overrightarrow{SR}$) related to the satellite in this direction, in which this direction of the predetermined celestial object is defined in the reference related to the satellite by a first quantity representing a first angle ($\alpha$, $\alpha'$) measured between a sight line (Zs, Zs') and the projection of this direction onto a first reference plane containing this sight line and by a second quantity representing a second angle ($\beta'$) defined by this sight line and the projection of this direction onto a second reference plane containing this sight line, characterised in that this second angle is calculated from this first angle and the instantaneous angular velocity vector of the satellite.

2. Method according to Claim 1, characterised in that this sight line belongs to a sensor (13a, 13b) with at least one sensitive axis (Ys, Ys'), the first reference plane being defined as being perpendicular to the sensitive axis.

3. Method according to Claim 2, characterised in that the second reference plane is perpendicular to the first reference plane and defined as containing the sight line and the sensitive axis.

4. Method according to Claim 2 or Claim 3, characterised in that the sensor is a 1-axis sensor.

5. Method according to Claim 2 or Claim 3, characterised in that the sensor is a 2-axis sensor, only one output of which is used.

6. Method according to one of Claims 1 to 3, characterised in that the first and second quantities representing the first and second angles are the tangents of these angles.

7. Method according to any one of Claims 1 to 6, in which the control law is of the type:

$$\vec{u} = Kd^*[\vec{\omega} - C^*\vec{s}_{s/c}] - Kp^*[\vec{s}_{s/c} \wedge \overrightarrow{SR}]$$

in which:

$\vec{u} =$   command to be applied to torque generator

$\vec{s}_{s/c} =$   unit vector of the instantaneous direction of the celestial object

$\overrightarrow{SR} =$   unit vector of the aiming axis forming a rotation reference axis

$\vec{\omega} =$   measured velocity vector

$C =$   rotation speed ordered about $\overrightarrow{SR}$

Kd = speed regulation gain

Kp = position regulation gain

Λ = cross product

8. Method according to any one of Claims 1 to 7, in which the celestial object is the Sun.

9. Method according to Claim 8, characterised in that the aiming axis is an axis at least approximately close to an axis of inertia of the satellite, chosen so as to obtain permanent illumination of a solar generator included in the satellite, by virtue of which the satellite is in Sun-aimed mode.

10. Method according to Claim 8, characterised in that the satellite has another sensor (12, 14) having a second line of sight, adapted to detect another predetermined celestial object, and the aiming axis is chosen so as to form, with this second line of sight, an angle at least approximately equal to the angle (Sun) - satellite - (or other celestial object).

11. Method according to Claim 10, characterised in that this other celestial object is a star by virtue of which the satellite is in star acquisition mode.

12. Method according to Claim 10, characterised in that this other celestial object is the Earth, by virtue of which the satellite is in Earth acquisition mode.

13. Method according to any one of Claims 1 to 7, characterised in that the celestial object is a star.

14. Method according to Claim 13, characterised in that the satellite also has an Earth sensor (12) with a second line of sight, and the sight axis is chosen so as to form with this second line of sight an angle at least approximately equal to the star - satellite - Earth angle by virtue of which the satellite is in Earth acquisition from a star mode.

15. Method according to any one of Claims 1 to 14, characterised in that the satellite is stabilised in 3 axes on a geosynchronous orbit of inclination less than 10 degrees.

16. Satellite having a body (11), a sensor (13a, 13b) having a line of sight (Zs) adapted to detect a predetermined celestial object and to supply a first quantity representing a first angle ($\alpha$, $\alpha'$) measured between the line of sight and the projection of the instantaneous direction of the celestial object onto a first reference plane containing this line of sight, an actuation assembly (16), an attitude control unit (20) suitable for generating, on the basis of this first quantity and a second quantity representing an angle ($\beta'$) defined by the line of sight and the projection of this instantaneous direction of the celestial object onto a second reference plane containing this line of sight, distinct from the first reference plane, signals suitable for applying to the satellite, through the actuation assembly (16), torques suitable for rotating the satellite about this direction and orienting an aiming axis in this direction, and an assembly (15) for measuring the instantaneous speed of rotation of the satellite, characterised in that this second representative quantity is applied to the attitude control unit by a preliminary processing unit (21) adapted to calculate this second quantity from the first quantity and from the output signal of the assembly (15) for measuring the instantaneous rotation speed.

17. Satellite according to Claim 16, characterised in that this sensor is a sensor with a single sensitive axis, the first reference plane being perpendicular to this sensitive axis, and the second reference plane containing this sensitive axis.

18. Satellite according to Claim 16 or Claim 17, characterised in that the sensor is a solar sensor.

19. Satellite according to Claim 18, characterised in that the satellite also has a stellar sensor.

20. Satellite according to any one of Claims 16 to 20, characterised in that the actuation assembly includes jet pipes.

21. Satellite according to any one of Claims 16 to 21, characterised in that the assembly for measuring the instantaneous speed of rotation of the satellite includes gyrometers.

Fig.1

Fig.3

SOLEIL

POLAIRE

TERRE

Fig.2

Fig.4

Fig.5